# EUROPÄISCHE PATENTSCHRIFT

(11) **EP 3 857 197 B1**
(45) Veröffentlichungstag und Bekanntmachung des Hinweises auf die Patenterteilung: **23.11.2022**
(21) Anmeldenummer: 19773058.3
(22) Anmeldetag: 19.09.2019
(51) Int. Cl.: G01M 13/04

(54) **WÄLZKÖRPER MIT SENSOR ZUR VERWENDUNG IN EINEM WÄLZLAGER**
ROLLING ELEMENT HAVING A SENSOR FOR USE IN A ROLLING-ELEMENT BEARING
CORPS DE ROULEMENT ÉQUIPÉ D'UN CAPTEUR ET DESTINÉ À ÊTRE UTILISÉ DANS UN PALIER À ROULEMENT

(30) Priorität: 24.09.2018 DE 102018216253
(43) Veröffentlichungstag der Anmeldung: 04.08.2021
(73) Patentinhaber: thyssenkrupp rothe erde Germany GmbH, 44137 Dortmund (DE); thyssenkrupp AG, 45143 Essen (DE)
(72) Erfinder: ELFERT, Gunther, 59597 Erwitte (DE); LÜNEBURG, Bernd, 45481 Mülheim (DE); ROLLMANN, Jörg, 59558 Lippstadt (DE); REIMANN, Manfred, 33758 Schloß Holte-Stukenbrock (DE)
(74) Vertreter: thyssenkrupp Intellectual Property GmbH
(86) Internationale Anmeldenummer: PCT/EP2019/075186
(87) Internationale Veröffentlichungsnummer: WO 2020/064504

(56) Entgegenhaltungen:
- EP-A2- 2 801 729
- DE-A1-102011 006 907
- DE-A1-102016 116 118
- US-A1- 2018 003 227

## Beschreibung

### Stand der Technik

Auf Großwälzlager, wie sie beispielsweise in Windkraftanlagen zum Einsatz kommen, wirken während des Betriebs erhebliche Kräfte. Daher ist es wünschenswert Belastungsmessungen des Wälzlagers durchführen zu können.

Zu diesem Zweck ist es beispielsweise aus der EP 0 637 734 B1 bekannt, mit Hilfe von Dehnungsmessstreifen, die in einer Bohrung eines Wälzkörpers angeordnet sind, die Verformungen des Wälzkörpers zu messen, wobei aus den Verformungen des Wälzkörpers auf die auf das Wälzlager einwirkenden Kräfte, also die Belastungen, geschlossen werden kann. Die Dehnungsmessstreifen und ihre jeweilige Befestigung, im Regelfall eine Klebung, sind jedoch äußerst verschleiss- und alterungsanfällig, insbesondere da sie in den Wälzlagern in der Regel mit Fetten und/oder anderen Schmierstoffen in Kontakt kommen, und müssen regelmäßig ersetzt werden. Daher ist eine solche Belastungsmessung nur unter Laborbedingungen oder für eine kurze begrenzte Zeit möglich oder für eine begrenzte Zeit..

Aus der EP 1 849 013 B1 ist bekannt, Sensoren an einem die Wälzkörper in ihrer relativen Lage zueinander fixierenden Käfig anzuordnen, wobei die Sensoren Wirbelströme messen, die in den Wälzkörpern durch Spulen induziert werden. Aus den Wirbelstrommessungen wird dann auf die herrschenden Belastungen geschlossen. EP 2 801 729 A2 offenbart ein Großlager, in dem zwei Bauteile in Abhängigkeit eines Lagerspiels zueinander versetzbar sind. Um das Lagerspiel einstellen bzw. überwachen zu können, ist eine integrierte Sensoreinheit mit einem Sensor zur Messung des Abstandes zwischen den beiden Bauteilen ausgebildet. Die Messung des Abstandes erfolgt berührungslos, beispielsweise mittels induktiver Sensoren.

US 2018/0003227 A1 beschreibt einen Wälzkörper mit einer Hohlbohrung, in der eine Kraftmesseinrichtung angeordnet ist, um die radial auf den Wälzkörper wirkende Belastung zu messen. Die Kraftmesseinrichtung umfasst einen oder mehrere Kragarme, die sich in axialer Richtung des Wälzkörpers erstrecken und mit einem Kontaktelement an der Bohrungswand anliegen. An jedem Kragarm ist mindestens ein Dehnungsmessstreifen als Sensor angeordnet, um dessen Verbiegung aufgrund von seiner Auslenkung in radialer Richtung zu messen.

DE 10 2011 006 907 A1 beschreibt einen Wälzkörper für ein Wälzlager mit einem im wesentlichen kreisförmigen Elemente aus einem piezoelektrischen Material, die in einer elektrisch leitenden Ummantelung aufgenommen ist. Der Wälzkörper wird als Sensor verwendet, der Kräfte bzw. Schwingungen in dem Wälzlager erfasst.

Alternativ offenbart die Druckschrift EP 1 795 869 A1 einen Wälzkörper mit einer Bohrung, in dem zwei Platten parallel und voneinander beabstandet angeordnet sind, wobei auf den Platten gegenüberliegend jeweils eine Elektrode angebracht ist, die kapazitiv den Abstand der Platten zueinander messen. Dieser Abstand ist veränderlich, da sie die Platten durch die belastungsinduzierte Verformung des Wälzkörpers verbiegen. Diese Messung ist auf einen Bereich des Wälzkörpers beschränkt und ist durch die Verbiegung der Platinen ebenfalls verschleißanfällig. Zudem können die Platten sich gegeneinander verschieben, was zu Messungenauigkeiten führt.

Auch aus DE 10 2016 116 118 A1 ist ein Wälzkörper mit einer Bohrung und einem in der Bohrung angeordneten Sensor zur Belastungsmessung bekannt, wobei der Sensor ein kapazitiver Sensor ist, der zur Messung eines Abstandes zwischen dem Sensor und der Bohrungswandung vorgesehen ist.

Allgemein kann gesagt werden, dass kapazitive Belastungsmessungen einen sehr hohen Aufwand bei der Fertigung der Wälzkörper erfordern. Die jeweiligen Sensoren müssen aufwendig an die Wälzkörpergeometrie angepasst werden. Kritisch ist hier vor allem der Abstand zwischen dem kapazitiven Sensor und der Fläche zu der ein Abstand gemessen werden soll. Schließlich ist eine kapazitive Belastungsmessung nur wenig präzise und in ihrer Auflösung stark beschränkt.

### Offenbarung der Erfindung

Es ist also eine Aufgabe der vorliegenden Erfindung, Wälzkörper und ein Wälzlager zur Verfügung zu stellen, mit welchen während des laufenden Betriebs eine zuverlässige, präzise und dauerhafte Belastungsmessung möglich ist und welche dabei leichter herzustellen sind.

Gelöst wird diese Aufgabe mit einem Wälzkörper nach Anspruch 1.

Der Sensor nutzt zur Abstandsmessung Wirbelströme, die er in einem Objekt induziert, zu dem der Abstand zu messen ist. Dazu enthält der Sensor einen LC-Schwingkreis, der zu hochfrequenten elektrischen Schwingungen angeregt wird. Denkbar sind hier beispielsweise Schwingungen mit Frequenzen von 1 MHz oder mehr. Die elektrischen Schwingungen des LC-Schwingkreises erzeugen ein elektromagnetisches Wechselfeld in der Umgebung des LC-Schwingkreises. Nähert sich nun ein elektrisch leitfähiges Objekt des LC-Schwingkreis, so werden in dem Objekt Wirbelströme induziert, welche die Schwingungen dämpfen. Die Dämpfung der Schwingungen wird gemessen und ausgewertet.

Der erfindungsgemäße Wälzkörper ist besonders vorteilhaft gegenüber Wälzkörpern mit herkömmlichen Sensoren, da das induktive Messen der Belastung des Wälzkörpers nicht an so hohe Anforderungen, die Maßhaltigkeit der Fertigung betreffend, geknüpft ist, wie beispielsweise ein kapazitives Messen. Gerade bei Wälzkörpern mit Sensoren für kapazitive Messung von Belastungen ist es von sehr großer Wichtigkeit, alle den kapazitiven Sensor betreffenden Maße einzuhalten. Solche Wälzkörper werden in aufwendigen Verfahren von Hand nachgearbeitet, was eine Fertigung in großer Zahl ausschließt und den einzelnen Wälzkörper sehr teuer macht. Zudem ist mit dem erfindungsgemäßen Wälzkörper eine wesentlich genauere Belastungsmessung möglich, als mit einem aus dem Stand der Technik bekannten Wälzkörper. Während die Auflösung einer Verformungsmessung mit einem kapazitiven Sensor bei etwa 0,1 µm bis 1 µm liegt, können mit dem erfindungsgemäßen Wälzkörper Verformungsmessungen mit einer Auflösung von bis zu 0,01 µm durchgeführt werden.

Dass die Bohrung entlang der Mittelachse des Wälzkörpers vorgesehen ist, bedeutet im Sinne der vorliegenden Erfindung, dass eine Mittelachse der Bohrung im Wesentlichen parallel zu der Mittelachse des Wälzkörpers angeordnet ist. Dies umfasst zum einen eine Anordnung der Bohrung mit einem Versatz zwischen der Mittelachse der Bohrung und der Mittelachse des Wälzkörpers und zum anderen eine Anordnung der Bohrung, wobei die Mittelachse der Bohrung der Mittelachse des Wälzkörpers entspricht.

Vorzugsweise ist der Außenmantel des Wälzkörpers wenigstens teilweise als Laufläche vorgesehen, auf der Lagerringe, insbesondere ein Außenring und ein Innenring, des Wälzlagers abrollen. Dabei ist vorzugsweise einer der Lagerringe drehfest vorgesehen, beispielsweise der Außenring, während der andere Lagerring konzentrisch dazu und drehbar vorgesehen ist. Vorzugsweise ist der Wälzkörper zylinderförmig, tonnenförmig, toroidal und/oder kegelförmig ausgebildet. In diesem Fall weist der Wälzkörper eine Haupterstreckungsrichtung auf, wobei die Mittelachse parallel zu der Haupterstreckungsrichtung angeordnet ist. Besonders bevorzugt ist der Wälzkörper im Wesentlichen rotationssymmetrisch um die Mittelachse vorgesehen, insbesondere in dem Bereich zwischen der Bohrungswandung und dem Außenmantel. Der Außenmantel entspricht insbesondere einer äußeren Mantelfläche des Wälzkörpers. Beispielsweise weist der Wälzkörper die Form eines 104 mm langen Zylinders auf mit einem Durchmesser von 65 mm. In diesem Fall hat die Bohrung vorzugsweise einen Durchmesser von 20 mm. Vorzugsweise sind auch das Übertragungsmodul und/oder die Energiequelle wenigstens teilweise in der Bohrung angeordnet.

Abhängig von den auf das Wälzlager und damit auf den Wälzkörper einwirkenden Kräften wird der Wälzkörper verformt, was anhand einer Änderung des Querschnitts der Bohrung messbar ist. Besonders bevorzugt ist der Sensor zur Übermittlung der gemessenen Daten an das Übertragungsmodul konfiguriert, wobei das Übertragungsmodul zur Übertragung der gemessenen Daten konfiguriert ist, beispielsweise an ein geeignetes Empfangsgerät. Hierdurch wird in vorteilhafter Weise eine präzise und einfache Belastungsmessung ermöglicht.

Weiterhin ist denkbar, dass der Wälzkörper eine Einrichtung zur Messung der von der Energiequelle zur Verfügung gestellten elektrischen Spannung und/oder des von der Energiequelle zur Verfügung gestellten elektrischen Stromes aufweist. Dazu ist denkbar, dass die Einrichtung zur Messung der von der Energiequelle zur Verfügung gestellten elektrischen Spannung und/oder des von der Energiequelle zur Verfügung gestellten elektrischen Stromes von der Energiequelle mit Energie versorgt wird und dass die von der Einrichtung zur Messung der von der Energiequelle zur Verfügung gestellten elektrischen Spannung und/oder des von der Energiequelle zur Verfügung gestellten elektrischen Stromes ermittelten Daten vom Übertragungsmodul übertragen werden. Schließlich ist denkbar, dass der Wälzkörper eine Einrichtung zur Ermittlung der Drehzahl des Wälzkörpers, eine Einrichtung zur Ermittlung der Schiefstellung des Wälzkörpers und eine Einrichtung zur Ermittlung des Schlupfes des Wälzkörpers aufweist. Denkbar ist für die Einrichtung zur Ermittlung der Drehzahl des Wälzkörpers, die Einrichtung zur Ermittlung der Schiefstellung des Wälzkörpers und die Einrichtung zur Ermittlung des Schlupfes des Wälzkörpers, dass diese jeweils der Energiequelle mit Energie versorgt werden und dass die von der Einrichtung zur Ermittlung der Drehzahl des Wälzkörpers, der Einrichtung zur Ermittlung der Schiefstellung des Wälzkörpers und der Einrichtung zur Ermittlung des Schlupfes des Wälzkörpers ermittelten Daten von dem Übertragungsmodul übertragen werden.

Vorteilhafte Ausgestaltungen und Weiterbildungen der Erfindung können den Unteransprüchen, sowie der Beschreibung unter Bezugnahme auf die Zeichnungen entnommen werden.

Gemäß einer bevorzugten Ausführungsform der vorliegenden Erfindung ist vorgesehen, dass das Übertragungsmodul ein Funkmodul ist. Funkwellen sind geeignet, aus dem erfindungsgemäßen Wälzkörper nach außen zu dringen. Damit ist eine vorteilhafte Möglichkeit geschaffen, kabellos Daten vom Inneren des Wälzkörpers nach außen zu übertragen.

Gemäß einer bevorzugten Ausführungsform der vorliegenden Erfindung ist vorgesehen, dass die Energiequelle ein Mikrogenerator ist. Ein Mikrogenerator im Rahmen dieser Anmeldung ist dabei insbesondere eine Vorrichtung mit geringen Abmessungen, welche aus der Umgebung Energie gewinnt und somit eine autonome Energiequelle darstellt. Besonders bevorzugt bedient sich der Mikrogenerator dabei wenigstens einem Verfahren des sogenannten Energy Harvesting. Ganz besonders bevorzugt gewinnt der Mikrogenerator Energie aus einem Temperaturunterschied, einem Luftdruckunterschied, einer Luftströmung, mittels Photovoltaik und/oder, im Rahmen dieser Anmeldung besonders bevorzugt, aus Bewegung. Der Mikrogenerator ist also insbesondere dazu vorgesehen, aus der Abroll- bzw. Drehbewegung des Wälzkörpers Energie zu gewinnen, die er dann zum Betrieb des Sensors und/oder der Übertragungseinrichtung zur Verfügung stellt. Denkbar ist auch, dass der Mikrogenerator ein induktiver Generator ist oder dass der Wälzkörper einen induktiven Generator aufweist. Besonders bevorzugt wirkt der induktive Generator mit Magneten und/oder Spulen zusammen, die an einem Käfig eines Wälzlagers angeordnet sind. Hierdurch ist es in besonders vorteilhafter Weise möglich, eine autonome Energieversorgung bereitzustellen, die insbesondere auch nur dann Energie zur Verfügung stellt, wenn sie benötigt wird, nämlich bei einer Drehung des Wälzkörpers. In dem Fall, dass der Wälzkörper zusätzlich zu dem Mikrogenerator einen induktiven Generator aufweist, ist es vorteilhaft möglich eine redundante Stromversorgung vorzusehen für den Fall einer Störung oder eines Ausfalls des Mikrogenerators. Insbesondere in Kombination mit Magneten ist dabei vorteilhafterweise weiterhin keine Verkabelung des Wälzlagers nötig.

Gemäß der vorliegenden Erfindung ist vorgesehen, dass der Wälzkörper eine in der Bohrung im Wesentlichen parallel zur Mittelachse des Wälzkörpers angeordnete Platine aufweist, und wobei der Sensor eine auf der Platine angeordnete Leiterbahn aufweist. Denkbar ist, dass das Übertragungsmodul und/oder die Energiequelle an der Platine befestigt sind. Besonders bevorzugt weist die Platine eine Dicke von 1 mm bis 2 mm, insbesondere 1,6 mm, auf. Hierdurch wird in vorteilhafter Weise eine einfache Installation der einzelnen Komponenten in dem Wälzkörper ermöglicht. Denkbar ist, dass die Leiterbahn auf die Platine aufgedruckt ist. Weiterhin ist denkbar, dass die Leiterbahn als Spule ausgebildet ist.

Es ist erfindungsgemäß vorgesehen, dass die Leiterbahn zum Erzeugen eines Magnetfeldes geeignet ist. Vorstellbar ist, dass die Leiterbahn einen im Wesentlichen runden mehreckigen, bevorzugt viereckigen, Verlauf aufweist.

Gemäß der vorliegenden Erfindung ist vorgesehen, dass der Sensor einen an der Bohrungswandung angeordneten leitfähigen Messkontakt aufweist, wobei der Messkontakt an einer die Bohrungswand berührenden und der Platine abgewandten Fläche der Kontur der Bohrungswand angepasst ist und an einer der Platine zugewandten Fläche eine im Wesentlichen zur Platine parallele Messfläche aufweist. Dies ermöglicht, dass durch Belastungen des Wälzkörpers hervorgerufene Verformungen auf den Messkontakt übertragen werden und sich so als Änderung des Abstandes zwischen der Messfläche und der Platine äußern. Dadurch, dass die Messfläche im Wesentlichen parallel zur Platine angeordnet ist, ergibt sich eine Möglichkeit, Belastungen sehr genau zu messen.

Gemäß einer weiteren bevorzugten Ausführungsform der vorliegenden Erfindung ist vorgesehen, dass der Sensor einen an der dem Messkontakt abgewandten Seite der Platine angeordneten Abstandshalter aufweist, wobei der Abstandshalter vorzugsweise an einer die Bohrungswand berührenden und der Platine abgewandten Außenfläche der Kontur der Bohrungswand angepasst ist und an der der Außenfläche gegenüberliegenden Fläche an der Platine fixiert ist, wobei der Abstandshalter vorzugsweise mit der Platine verklebt und/oder verschraubt und/oder verklipst ist. Damit ist vorteilhaft realisiert, dass die Platine indirekt mit der Bohrungswand über den Abstandshalter verbunden ist. Eine Deformation des Wälzkörpers, also auch der Bohrung, bewirkt nun, dass sich sowohl die Platine als auch der Messkontakt aufeinander zu beziehungsweise von einander weg bewegen. Im Vergleich zu einer Ausführungsform, bei der sich nur der Messkontakt bewegt und die Platine nicht in mechanischem Kontakt mit der Bohrungswand steht, ist eine aus einer Deformation des Wälzkörpers resultierende Größenänderung des Spaltes etwa doppelt so groß. Damit ist eine deutlich bessere Auflösung der Verformungsmessung möglich.

Gemäß der vorliegenden Erfindung ist vorgesehen, dass zwischen der Leiterbahn und der Messfläche ein Spalt vorgesehen ist. Die Ausdehnung des Spaltes ist direkt mit der Verformung des Wälzkörpers verknüpft und damit direkt aussagekräftig bezüglich der Verformung des Wälzkörpers. Ferner ist durch den Spalt die Platine von der Bohrungswand mechanisch entkoppelt. Hierdurch wird die Platine im Betrieb des Wälzkörpers weniger mechanischem Stress unterzogen, woraufhin sich die Lebensdauer der Platine verlängert. Ferner bedingt die mechanische Entkopplung eine Verbesserung der Genauigkeit der Messergebnisse.

Gemäß der vorliegenden Erfindung ist vorgesehen, dass der Sensor geeignet ist, die Größe des Spaltes durch das Erzeugen von Wirbelströmen im Messkontakt zu ermitteln. Größe des Spaltes bedeutet im Sinne der vorliegenden Erfindung Abstand zwischen der Platine und der Messfläche entlang der Flächennormalen der Messfläche. Die induktive Messung der Größe des Spaltes ist hochpräzise und ermüdungsfrei. Kleinste Veränderungen der Größe des Spaltes können detektiert werden, wobei die Grenzen für die Größe des Spaltes im unbelasteten Zustand des Wälzkörpers sehr weit sind. Dies ermöglicht Messergebnisse mit hoher Qualität und gleichzeitig eine weitgehend hohe Unempfindlichkeit gegenüber Abweichungen bei der Fertigung.

Gemäß einer weiteren bevorzugten Ausführungsform ist vorgesehen, dass in der Bohrung wenigstens zwei voneinander entlang der Mittelachse beabstandete Sensoren angeordnet sind. Hierdurch wird es in vorteilhafter Weise ermöglicht, zusätzlich zu Kräften auch eine Verkippung oder Schiefstellung des Wälzkörpers zu messen, indem die gemessenen Daten der Sensoren ausgewertet, insbesondere verglichen, werden.

Gemäß einer weiteren bevorzugten Ausführungsform ist vorgesehen, dass das Funkmodul zur Übertragung der gemessenen Daten in einem Frequenzbereich von 100 MHz bis 6 GHz, vorzugsweise von 300 MHz bis 2 GHz, besonders bevorzugt von 700 MHz bis 1 GHz, insbesondere mit einer Frequenz von 868 MHz, vorgesehen ist. Hierdurch wird in vorteilhafter Weise eine kabellose Datenübertragung ermöglicht, die auch durch ggf. metallische Komponenten des Wälzkörpers oder des Wälzlagers nicht gestört wird und eine hinreichend große Übertragungsreichweite aufweist.

Gemäß einer weiteren bevorzugten Ausführungsform der vorliegenden Erfindung ist vorgesehen, dass der Wälzkörper einen Energiespeicher zum Zwischenspeichern von elektrischer Energie aufweist, wobei der Energiespeicher vorzugsweise ein Kondensator ist. Denkbar ist, dass der Energiespeicher zur Speicherung der von dem Mikrogenerator erzeugten Energie vorgesehen ist. Bevorzugt ist der Energiespeicher auf der Platine vorgesehen. Besonders bevorzugt ist der Energiespeicher ein Akkumulator und/oder ein Kondensator, insbesondere ein hochkapazitiver Kondensator, z.B. ein sogenannter Green-Cap-Kondensator. Denkbar dazu ist, dass der Wälzkörper eine Einheit zum Überwachen des Ladezustandes des Energiespeichers aufweist.

In einer weiteren bevorzugten Ausführungsform ist vorgesehen, dass die Platine einen Mikrocontroller aufweist, wobei der Mikrocontroller einen elektronischen Speicher zum Zwischenspeichern von Messdaten aufweist. Die Messdaten können damit vorteilhaft zu Paketen zusammengefasst und als Pakete zeitversetzt übermittelt werden. Dies hat den Vorteil, dass die Messungen energieeffizient und vollständig durchgeführt werden können. Steht kurzfristig nicht ausreichend viel Energie zur Messung und Übermittlung der Messdaten zur Verfügung, so ist es möglich, die Messung und Übermittlung in Paketen dann durchzuführen, wenn genügend Energie zur Verfügung steht, beispielsweise wenn ein Energiespeicher ausreichend aufgeladen ist.

Gemäß einer weiteren bevorzugten Ausführungsform ist vorgesehen, dass die Wälzkörperbohrung einen Durchmesser von 5 mm bis 50 mm, vorzugsweise von 10 mm bis 30 mm, insbesondere einen Durchmesser von 20 mm, aufweist, und/oder dass der Wälzkörper vorzugsweise zylinderförmig ausgebildet ist und besonders bevorzugt eine Länge von 90 mm bis 150 mm, insbesondere 140mm, sowie ganz besonders bevorzugt einen Durchmesser von 90 mm bis 110 mm, insbesondere 100mm, aufweist. Dies hat sich als besonders vorteilhaft bei Wälzkörper für Wälzlager für Momentenlager für Windenergieanlagen von circa 8 MW mit beispielsweise 3,5 m Laufkreisdurchmesser erwiesen. Der Durchmesser der Bohrung ist abhängig vom Durchmesser des Wälzkörpers, von der Anzahl an Wälzkörpern im Wälzlager und von den erwarteten Belastungen und Verformungen des Wälzkörpers im Betrieb des Wälzlagers. Die Durchmesser der Bohrung des Wälzkörpers werden unter Berücksichtigung der möglichen Sensorauflösung festgelegt. Hierdurch wird einerseits eine hinreichend große Bohrung zur Unterbringung sämtlicher Komponenten zur Verfügung gestellt. Weiterhin ist der Wälzkörper dauerfest ausgelegt. Andererseits ist bei einer Bohrung mit den oben genannten Maßen der zur Verfügung stehende Verformungsspielraum groß genug für eine präzise Messung

Gemäß einer weiteren bevorzugten Ausführungsform ist vorgesehen, dass an der Bohrungswandung, insbesondere in radialer Richtung wenigstens teilweise umlaufend, ein Dehnungsmessstreifen angeordnet ist. Hierdurch ist es vorteilhafterweise möglich, zusätzlich zu der präzisen induktiven Messung, eine redundante und bewährte Messmethode mit geringem Aufwand zu implementieren.

Gemäß einer weiteren bevorzugten Ausführungsform ist vorgesehen, dass der Wälzkörper ein Mittel zur Temperaturbestimmung, umfasst. Damit ist vorteilhaft eine Temperaturkontrolle möglich. Denkbar ist, dass das Übertragungselement zum Übertragen der von dem Mittel zur Temperaturbestimmung erfassten Daten konfiguriert ist. Denkbar ist weiterhin, dass die Energiequelle zur Versorgung des Mittels zur Temperaturbestimmung mit Energie konfiguriert ist, das heißt, dass die Energiequelle geeignet ist, das Mittel zur Temperaturbestimmung mit Energie zu versorgen.

Gemäß einer weiteren bevorzugten Ausführungsform ist vorgesehen, dass der Wälzkörper ein Mittel zur Beschleunigungsbestimmung, umfasst. Damit ist vorteilhaft eine Kontrolle der Beschleunigung und des Schlupfes des Wälzkörpers möglich. Denkbar ist, dass das Übertragungselement zum Übertragen der von dem Mittel zur Beschleunigungsbestimmung erfassten Daten konfiguriert ist, das heißt, dass die Energiequelle geeignet ist, das Mittel zur Beschleunigungsbestimmung mit Energie zu versorgen. Denkbar ist weiterhin, dass die Energiequelle zur Versorgung des Mittels zur Beschleunigungsbestimmung mit Energie konfiguriert ist. Ferner ist denkbar, dass das Mittel zur Beschleunigungsbestimmung einen dreiachsigen Beschleunigungssensor umfasst.

Ein weiterer Gegenstand der vorliegenden Erfindung ist ein Wälzlager, insbesondere ein Großwälzlager, mit einem ersten Lagerring und einem um eine Drehachse drehbaren, und insbesondere konzentrisch zu dem ersten Lagerring angeordneten zweiten Lagerring, sowie einer Vielzahl von zwischen dem ersten Lagerring und dem zweiten Lagerring angeordneten Wälzkörpern, wobei wenigstens ein Wälzkörper ein Wälzkörper gemäß einem der Ansprüche 1 bis 16 ist. Vorzugsweise ist der erste Lagerring ein Außenring und/oder der zweite Lagerring ein Innenring. Hierdurch ist es vorteilhaft möglich, ein Wälzlager bereitzustellen, welches eine hochpräzise Belastungsmessung ermöglicht und dabei einfach herzustellen ist.

Ein weiterer Gegenstand der vorliegenden Erfindung ist ein Verfahren zur Belastungsmessung eines Wälzkörpers in einem Wälzlager nach Anspruch 13, insbesondere einem Großwälzlager, wobei eine Verformung des Wälzkörpers durch eine Abstandsmessung mit dem Sensor durchgeführt wird, wobei die vom Sensor gemessenen Daten vorzugsweise von einem Übertragungsmodul übertragen werden, wobei vorzugsweise Energie für den Sensor und/oder für das das Übertragungsmodul von der Energiequelle bereitgestellt wird.

Gemäß einer bevorzugten Ausführungsform ist vorgesehen, dass die Abstandsmessung induktiv durchgeführt wird.

Gemäß einer bevorzugten Ausführungsform ist vorgesehen, dass das Wälzlager einen Wälzkörper gemäß einem der Ansprüche 8 bis 11 aufweist, wobei Messdaten in dem elektronischen Speicher des Mikrocontrollers auf der Platine zwischengespeichert werden und in Abhängigkeit eines Ladezustandes eines Energiespeichers paketweise gemessen und zusammengefasst und als Pakete zeitversetzt von dem Übertragungsmodul übertragen werden. Dies hat den Vorteil, dass die Messungen energieeffizient und vollständig durchgeführt werden können. Erst nach ausreichender Aufladung des Energiespeichers steht die Leistung zur Messung und Übermittlung der Daten zur Verfügung.

Alle vorstehenden Ausführungen unter "Offenbarung der Erfindung" gelten gleichermaßen für den erfindungsgemäßen Wälzkörper, das erfindungsgemäße Wälzlager und das erfindungsgemäße Verfahren.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Perspektivansicht eines Wälzkörpers gemäß einer beispielhaften Ausführungsform der vorliegenden Erfindung.
- **Figur 2**: zeigt eine schematische Schnittdarstellung senkrecht zur Mittelachse eines Wälzkörpers gemäß einer beispielhaften Ausführungsform der vorliegenden Erfindung mit einem Käfig eines Wälzlagers.
- **Figur 3**: zeigt eine schematische Schnittdarstellung parallel zu der Mittelachse eines Wälzkörpers gemäß einer beispielhaften Ausführungsform der vorliegenden Erfindung.
- **Figur 4**: zeigt ein schematisches Ersatzschaltbild der Spulen aus den Figuren 3 und 4 gemäß einer beispielhaften Ausführungsform der vorliegenden Erfindung.
- **Figur 5**: zeigt einen schematischen Längsschnitt eines Wälzkörpers gemäß einer beispielhaften Ausführungsform der vorliegenden Erfindung.
- **Figur 6**: zeigt eine Platine eines Wälzkörpers gemäß einer beispielhaften Ausführungsform der vorliegenden Erfindung.
- **Figur 7**: zeigt eine Perspektivansicht eines Wälzlagers gemäß einer beispielhaften Ausführungsform der vorliegenden Erfindung.
- **Figur 8**: zeigt eine perspektivische Detailansicht eines Wälzlagers gemäß einer beispielhaften Ausführungsform der vorliegenden Erfindung.
- **Figur 9**: zeigt eine schematische Darstellung eines Wälzlagers gemäß einer beispielhaften Ausführungsform der vorliegenden Erfindung.
- **Figur 10**: zeigt eine schematische Schnittdarstellung der Platine eines Wälzkörpers gemäß einer beispielhaften Ausführungsform der vorliegenden Erfindung.
- **Figur 11**: zeigt eine schematische Darstellung der Platine eines Wälzkörpers gemäß einer beispielhaften Ausführungsform der vorliegenden Erfindung.
- **Figur 12**: zeigt eine schematische Schnittdarstellung des Wälzkörpers und der Platine gemäß einer beispielhaften Ausführungsform der vorliegenden Erfindung.
- **Figur 13**: zeigt eine schematische Darstellung des Wälzkörpers gemäß einer beispielhaften Ausführungsform der vorliegenden Erfindung.
- **Figur 14**: zeigt eine schematische Darstellung des Wälzkörpers mit der Platine, dem Messkontakt und dem Abstandshalter gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

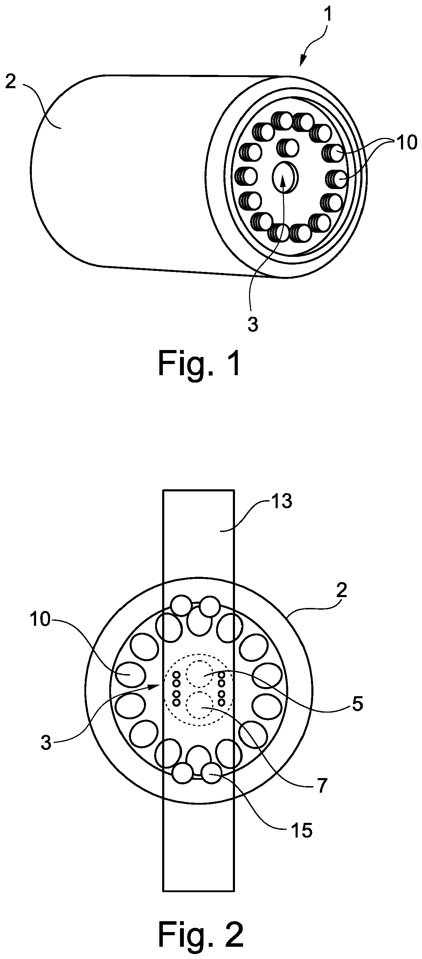

In **Figur 1** ist eine schematische Perspektivansicht eines Wälzkörpers 1 gemäß einer beispielhaften Ausführungsform der vorliegenden Erfindung dargestellt. Ein derartiger Wälzkörper 1 wird in Wälzlagern eingesetzt und dient der beweglichen Führung eines ersten Lagerrings 11 und eines zweiten Lagerrings 12 zueinander, insbesondere eines in einem drehfest angeordneten Außenring 11 angeordneten Innenrings 12. Dabei sind üblicherweise zwischen Außenring 11 und Innenring 12 eine Vielzahl von Wälzkörpern vorgesehen, die auf Laufflächen des Außenrings 11 und des Innenrings 12 abrollen. Vorliegend handelt es sich um eine sogenannte Messrolle, also einen Wälzkörper 1, der zur Belastungsmessung in dem Wälzlager vorgesehen und ausgebildet ist.

Der Wälzkörper 1 umfasst hier einen zylindrischen oder im Wesentlichen kegelförmigen Körper mit einem Außenmantel 2 der als Lauffläche dient und auf der der Außenring 11 und der Innenring 12 abrollen. Der Wälzkörper 1 weist in seiner Mitte eine Bohrung 3 auf, die konzentrisch um die Mittelachse des Wälzkörpers 1 herum ausgebildet ist. Zu sehen sind zudem eine Vielzahl von Spulen 10, die hier auf einer Kreisbahn zwischen der Bohrung 3 und dem Außenmantel 2 angeordnet sind. Hierbei handelt es sich um vierzehn Spulen 10, die jeweils um ca. 25° versetzt angeordnet sind, wobei durch Beaufschlagen der Spulen mit einem äußeren elektrischen magnetischen Wechselfeld, in den Spulen eine elektrische Spannung erzeugt wird.

In **Figur 2** ist eine schematische Schnittdarstellung senkrecht zur Mittelachse eines Wälzkörpers 1 gemäß einer beispielhaften Ausführungsform der vorliegenden Erfindung mit einem Käfig 13 eines Wälzlagers dargestellt. Dabei entspricht die dargestellte Ausführungsform im Wesentlichen der in Figur 1 dargestellten Ausführungsform, so dass generell auf die diesbezüglichen Ausführungen verwiesen wird. In der Bohrung sind ein Sensor 5, hier ein induktiver Sensor 5, ein Funkmodul 6 und ein Mikrogenerator 4 vorgesehen. Der Mikrogenerator 4 ist hier ein induktiver Mikrogenerator. Damit die Wälzkörper eines Wälzlagers für eine gleichmäßige Lastverteilung regelmäßig beabstandet bleiben, ist zwischen dem Außenring 11 und dem Innenring 12 ein Käfig 13 angeordnet, der die Wälzkörper umfasst. D.h. die Wälzkörper sind drehbar, aber bezüglich des Käfigs 13 an festen Positionen gelagert. An der Stelle des Wälzkörpers 1 umfasst der Käfig 13 Magnete 15, hier vier Magnete 5. Diese Magnete 15 ermöglichen es dem Mikrogenerator 4 eine elektrische Spannung zu induzieren und somit eine Energieversorgung für den Sensor 5 und das Funkmodul 6 sowie die Spulen 10 bereitzustellen. Alternativ oder zusätzlich und im Rahmen der vorliegenden Erfindung bevorzugt ist der Mikrogenerator 4 derart vorgesehen, dass er alleine aus der Bewegung, d.h. dem Abrollen, des Wälzkörpers 1 Energie generiert.

Die Bohrung 3 ist durch eine hier nicht dargestellte entlang der Mittelachse des Wälzkörpers 1 angeordneten Platine 8 in zwei Halbräume geteilt. Der Sensor 5 ist in einem ersten Halbraum auf einer ersten Seite der Platine 8 angeordnet.

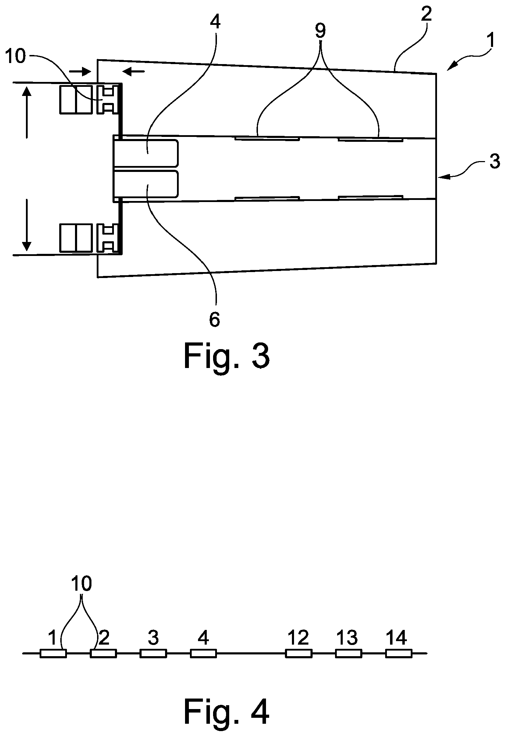

In **Figur 3** ist eine schematische Schnittdarstellung parallel zu der Mittelachse eines Wälzkörpers 1 gemäß einer beispielhaften Ausführungsform der vorliegenden Erfindung dargestellt. Dabei entspricht die dargestellte Ausführungsform im Wesentlichen der in Figur 2 dargestellten Ausführungsform, so dass generell auf die diesbezüglichen Ausführungen verwiesen wird. Hier ist insbesondere die Bohrung 3 zu erkennen, sowie schematisch der Mikrogenerator 4 und das Funkmodul 6.

In **Figur 4** ist ein schematisches Ersatzschaltbild der Spulen 10 aus den Figuren 3 und 4 gemäß einer beispielhaften Ausführungsform der vorliegenden Erfindung dargestellt. Die Spulen 10 stellen dabei Induktivitäten dar, die in Reihe geschaltet sind. Gemäß den zuvor beschriebenen Darstellungen sind hier vierzehn Spulen 10, entsprechend vierzehn Induktivitäten, vorgesehen.

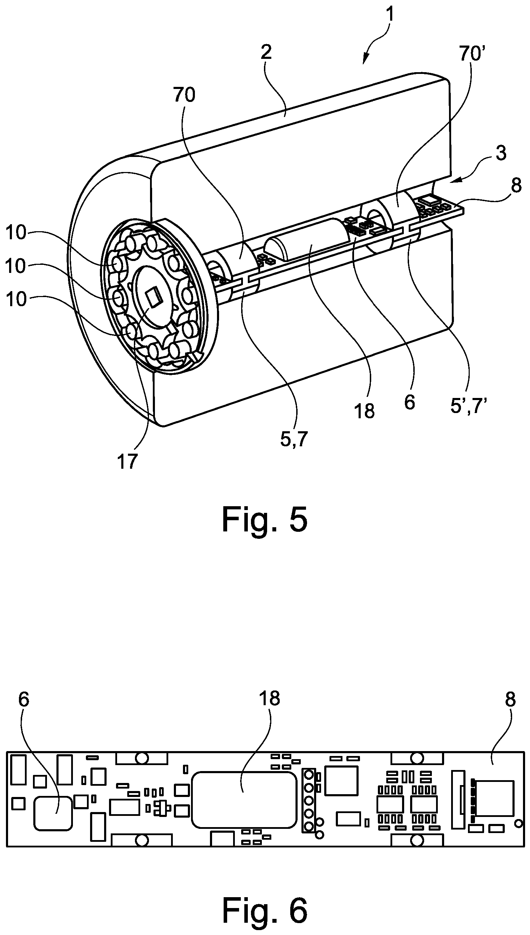

In **Figur 5** ist ein schematischer Längsschnitt eines Wälzkörpers 1 gemäß einer beispielhaften Ausführungsform der vorliegenden Erfindung dargestellt. Dabei entspricht die dargestellte Ausführungsform im Wesentlichen der in Figur 1 dargestellten Ausführungsform, so dass generell auf die diesbezüglichen Ausführungen verwiesen wird. Hier ist deutlich die Platine 8 zu erkennen, wobei auf der einen Seite der Platine 8 zwei entlang der Mittellinie des Wälzkörpers 1 voneinander beabstandete induktive Sensoren 5, 5' mit zwei Messkontakten 7, 7'angeordnet sind. Die Leiterbahnen der Sensoren 5, 5' sind in dieser Darstellung nicht sichtbar. Zwischen den Leiterbahnen und den Messkontakten 7, 7' ist ein Spalt vorgesehen.

Die 'Messkontakte 7, 7' sind in Kontakt mit der Bohrungswand. Je nachdem, ob die Bohrung gestaucht oder gedrückt wird, ändert sich der Abstand zwischen den 'Messkontakten 7, 7' und der Platine 8, welche durch die Abstandshalter 70, 70' in Kontakt mit der Bohrungswand steht. Dieser Abstand, also die Größe des Spaltes, wird gemessen. Zu erkennen sind weiterhin der Energiespeicher 18 und das Funkmodul 6.

In **Figur 6** ist eine Platine 8 eines Wälzkörpers 1 gemäß einer beispielhaften Ausführungsform der vorliegenden Erfindung dargestellt. Aus Gründen der Übersichtlichkeit sind dabei nicht alle Elemente dargestellt. In der Mitte ist der Energiespeicher 18 sichtbar. Ferner ist lediglich beispielshaft ein Funkmodul 6 dargestellt. Die Platine 8 ist derart bemessen, dass sie in die Bohrung 3 passt und vorzugsweise eine geringe seitliche Toleranz aufweist.

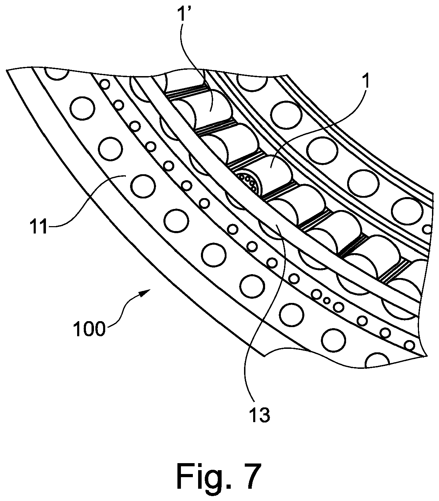

In **Figur 7** ist eine Perspektivansicht eines Wälzlagers 100 gemäß einer beispielhaften Ausführungsform der vorliegenden Erfindung dargestellt. Hier handelt es sich dabei um ein Großwälzlager mit einem als Außenring ausgeführten ersten Lagerring11, einem hier aus Gründen der Übersichtlichkeit nicht dargestellten, als Innenring ausgeführten zweiten Lagerring 12 und einem dazwischen angeordneten Käfig 13, der eine Vielzahl von Wälzkörpern umfasst und gleichmäßig voneinander beabstandet hält. Neben herkömmlichen Wälzkörpern 1' ist wenigstens ein Wälzkörper dabei ein Wälzkörper 1 im Sinne dieser Anmeldung, also eine Messrolle.

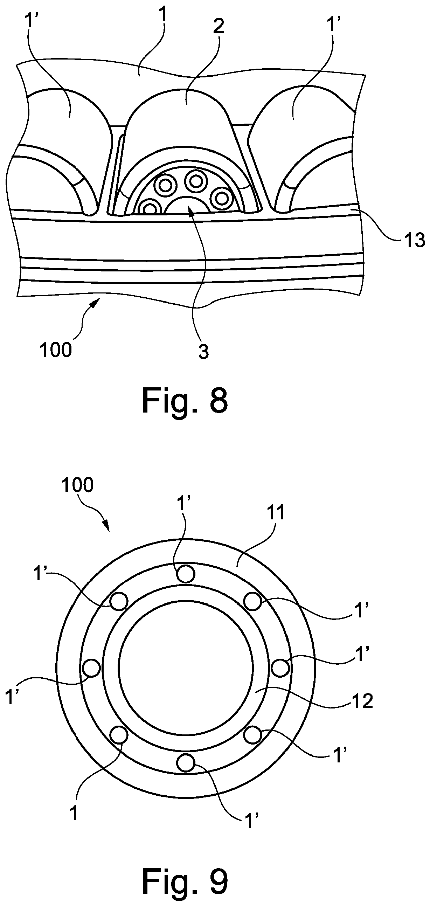

In **Figur 8** ist eine perspektivische Detailansicht eines Wälzlagers 100 gemäß einer beispielhaften Ausführungsform der vorliegenden Erfindung dargestellt. Hier ist insbesondere ein erfindungsgemäßer Wälzkörper 1 neben zwei herkömmlichen Wälzkörpern 1' dargestellt. Wie aus der Darstellung ersichtlich wird, weist der Wälzkörper 1 keine Verkabelung auf, er funktioniert autonom und übermittelt die Messdaten kabellos, so dass das Wälzlager 100 beispielsweise von einem Gehäuse umschlossen sein kann und dennoch eine Belastungsmessung möglich ist. Hierdurch kann das Großwälzlager beispielsweise in einer Windkraftanlage eingebaut werden und Belastungsmessdaten an eine Kontrolleinheit übermitteln, so dass ein Wartungsbedarf frühzeitig und ohne aufwändige Eingriffe in das Wälzlager 100 erkannt werden kann.

In **Figur 9** ist eine schematische Darstellung eines Wälzlagers 100 gemäß einer beispielhaften Ausführungsform der vorliegenden Erfindung gezeigt. Das Wälzlager 100 weist zwischen dem ersten Lagerring 11 und dem zweiten Lagerring 12 einen erfindungsgemäßen Wälzkörper 1 und eine Vielzahl herkömmlicher Wälzkörper 1' auf.

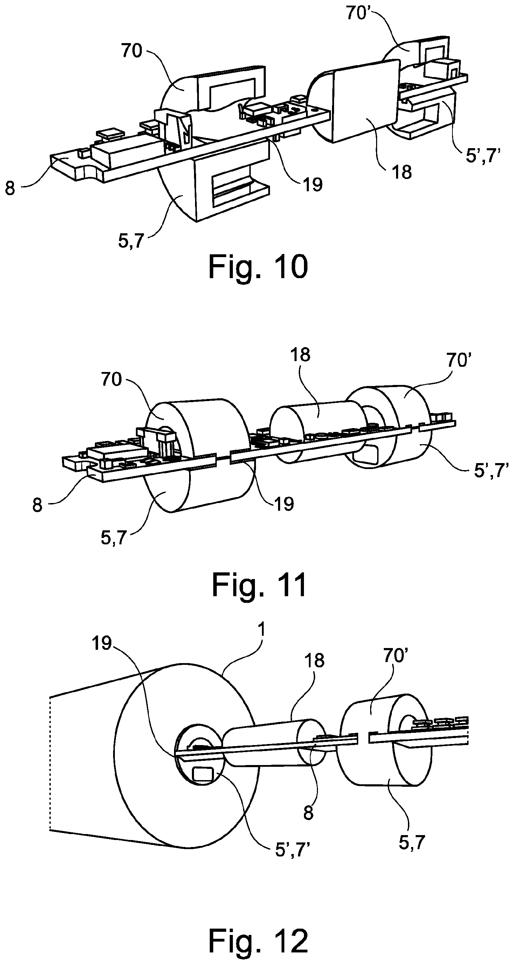

In **Figur 10** ist eine schematische Schnittdarstellung einer Platine 8 gemäß einer beispielhaften Ausführungsform der vorliegenden Erfindung gezeigt. Zu erkennen sind neben der Platine 8 die Sensoren 5, 5' mit den Messkontakten 7, 7' und den Abstandshaltern 70, 70', der Energiespeicher 18 und der Spalt 19 zwischen der nicht zu erkennenden, auf der Platine 8 angeordneten Leiterbahn und dem Messkontakt 7. Der Messkontakt 7 liegt mit seiner abgerundeten Seite an der Bohrungswand an (hier nicht dargestellt). Stauchungen der Bohrung übertragen sich auf den Messkontakt 7 und über den Abstandshalter 70 auf die Platine 8, wodurch sich die Größe des Spaltes 19 ändert. Die Messung der Größe des Spaltes 19 ermöglicht die Messung der Deformation des Wälzkörpers.

In **Figur 11** ist eine Darstellung einer Platine 8 gemäß einer beispielhaften Ausführungsform der vorliegenden Erfindung gezeigt. Zu erkennen sind die gleichen Merkmale wie sie in Figur 10 gezeigt sind, weshalb diese an dieser Stelle nicht weiter diskutiert werden. Am linken Sensor 5 mit dem linken Messkontakt 7 und dem linken Abstandshalter 70 ist im Gegensatz zum rechten Sensor 5' mit dem rechten Messkontakt 7' und dem rechten Abstandshalter 70' der Spalt 19 zu sehen. Dies ist der Tatsache geschuldet, dass der linke Sensor 5 in einem in den Wälzkörper eingebauten Zustand gezeichnet ist und der rechte Sensor 5' in einem nicht in den Wälzkörper eingebauten Zustand gezeichnet ist (siehe Figur 12). Im eingebauten Zustand liegen der Messkontakt 7 und der Abstandshalter 70 an der Bohrungswand an und damit ist die Messfläche des Messkontaktes 7 zur Platine 8 mit dem Spalt 19 beabstandet. Im nicht eingebauten Zustand liegt der Messkontakt 7' nicht an der Bohrungswand, sondern an der Platine 8 an.

In **Figur 12** ist eine Darstellung einer Platine 8 und eines Wälzkörpers 1 gemäß einer beispielhaften Ausführungsform der vorliegenden Erfindung gezeigt. Dargestellt ist das Einführen der Platine 8 mit den Sensoren 5' und 5 in die Bohrung des Wälzkörpers 1 bei der Herstellung des Wälzkörpers 1. Der Sensor 5' mit dem Messkontakt 7' und dem Abstandshalter 70' ist bereits in den Wälzkörper 1 eingeführt. Der Messkontakt 7' und der Abstandshalter 70' liegen an der Bohrungswand an. Dadurch ist der Spalt 19 zwischen dem Messkontakt 7' und der auf der Platine 8 angeordneten Leiterbahn gebildet. Zu erkennen sind weiterhin der Energiespeicher 18 und ein weiterer Sensor 5 mit einem weiteren Messkontakt 7 und einem weiteren Abstandshalter 70. Der weitere Messkontakt 7 ist noch nicht in die Bohrung des Wälzkörpers 1 eingeführt und damit noch nicht in Kontakt mit der Bohrungswand. Der weitere Messkontakt 7 liegt auf der Platine 8 auf, so dass an dieser Stelle kein Spalt entsteht.

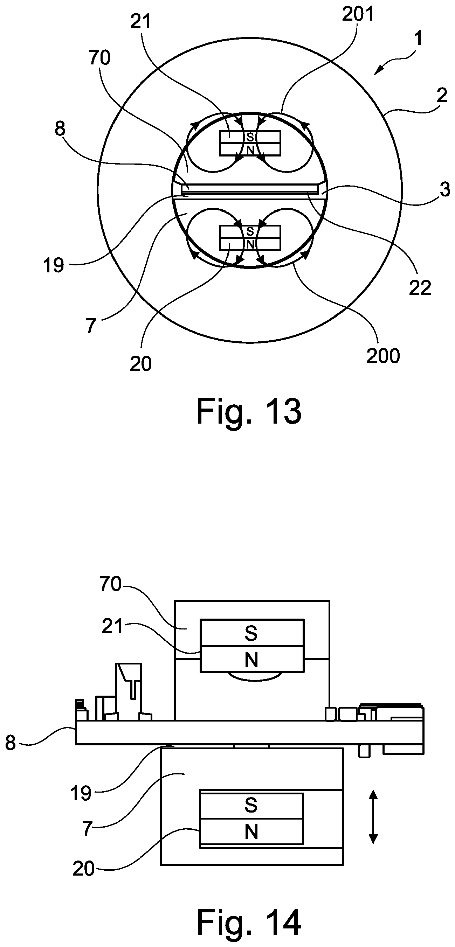

**Figur 13** zeigt eine schematische Darstellung des Wälzkörpers 1 gemäß einer beispielhaften Ausführungsform der vorliegenden Erfindung. Zu sehen ist ein Schnitt entlang einer Ebene, welche orthogonal auf der Mittelachse des Wälzkörpers 1 steht. In dem Wälzkörper 1 mit dem Außenmantel 2 ist in der Bohrung 3 die Platine 8 mit der Leiterbahn 22 angeordnet. Die Platine 8 steht über den Abstandshalter 70 in mechanischem Kontakt mit der Bohrungswand. Der Abstandshalter 70 ist mit dem weiteren Magneten 21 an der Bohrungswand fixiert. Die magnetische Wechselwirkung zwischen Bohrungswand und weiterem Magneten 21 ist durch die magnetischen Feldlinien 201 verdeutlicht. Weiterhin ist der Messkontakt 7 zu erkennen, welcher seinerseits mit dem Magneten 20 an der Bohrungswand fixiert ist. Die magnetische Wechselwirkung zwischen Bohrungswand und Magnet 20 ist ebenfalls durch die magnetischen Feldlinien 200 verdeutlicht. Wird der Wälzkörper 1 deformiert, so ändert sich die Größe des Spaltes 19 zwischen dem Messkontakt 7 und der Leiterbahn 22. Dir Größe des Spaltes 19 und damit die Deformation des Wälzkörpers 1 wird induktiv gemessen.

**Figur 14** zeigt eine schematische Darstellung eines Ausschnittes des Wälzkörpers 1 mit der Platine 8, dem Messkontakt 7 und dem Abstandshalter 70 gemäß einer beispielhaften Ausführungsform der vorliegenden Erfindung. Dargestellt ist hier ein Schnitt entlang der Mittelachse des Wälzkörpers 1. Zu erkennen sind die Platine 8 mit dem an ihr fixierten Abstandshalter 70, welcher in mechanischem Kontakt mit der Bohrungswand (nicht gezeigt) steht. Weiterhin ist der Messkontakt 7 zu erkennen. Zwischen dem Messkontakt 7 und der Platine 8 befindet sich der Spalt 19. Bei Deformationen des Wälzkörpers 1 kommt es zu Größenänderungen des Spaltes 19, dargestellt durch den Doppelpfeil. Eine Deformationsmessung des Wälzkörpers1 erfolgt durch Messung der Größe des Spaltes 19.

### Bezugszeichenliste

- 1: Wälzkörper
- 1': Wälzkörper
- 2: Außenmantel
- 3: Bohrung
- 4: Mikrogenerator
- 5,5': Sensor
- 6: Funkmodul
- 7, 7': Messkontakt
- 8: Platine
- 9: Dehnungsmessstreifen
- 10: Spulen
- 11: erster Lagerring
- 12: zweiter Lagerring
- 13: Käfig
- 14: Magnet
- 15: Käfigmagneten
- 17: weitere Platine
- 18: Energiespeicher
- 19: Spalt
- 20: erster Magnet
- 21: zweiter Magnet
- 22: Leiterbahn
- 70, 70': Abstandshalter
- 100: Wälzlager
- 200: magnetische Feldlinien
- 201: magnetische Feldlinien

## Patentansprüche

1. Wälzkörper (1) zur Verwendung in einem Wälzlager (100), mit einem Außenmantel (2) und einer Bohrung (3), wobei die Bohrung (3) vorzugsweise entlang einer Mittelachse des Wälzkörpers (1) vorgesehen ist, wobei der Wälzkörper (1) wenigstens einen in der Bohrung (3) angeordneten Sensor (5) zur Belastungsmessung und ein Übertragungsmodul zur Übertragung der von dem Sensor (5) gemessenen Daten umfasst, der Wälzkörper eine Energiequelle aufweist, die zur Bereitstellung der zum Betrieb des Sensors (5) und/oder des Übertragungsmoduls benötigten Energie vorgesehen ist, und wobei der Wälzkörper (1) eine in der Bohrung (3) im Wesentlichen parallel zur Mittelachse des Wälzkörpers (1) angeordnete Platine (8) aufweist, **dadurch gekennzeichnet, dass** der Sensor (5) ein induktiv messender Sensor ist, der eine auf der Platine (8) angeordnete Leiterbahn (22) und einen an der Bohrungswandung angeordneten leitfähigen Messkontakt (7) aufweist, wobei der Messkontakt (7) an einer die Bohrungswand berührenden und der Platine (8) abgewandten Fläche der Kontur der Bohrungswand angepasst ist und an einer der Platine (8) zugewandten Fläche eine im Wesentlichen zur Platine (8) parallele Messfläche aufweist, wobei zwischen der Leiterbahn (22) und der Messfläche ein Spalt (19) vorgesehen ist und der Sensor (5) geeignet ist, die Größe des Spaltes (19) durch das Erzeugen von Wirbelströmen im Messkontakt (7) zu ermitteln.

2. Wälzkörper (1) nach Anspruch 1, wobei das Übertragungsmodul ein Funkmodul (6) ist.

3. Wälzkörper (1) nach einem der vorhergehenden Ansprüche, wobei die Energiequelle ein Mikrogenerator (4) ist.

4. Wälzkörper (1) nach einem der Ansprüche 1 bis 3, wobei der Sensor (5) einen an der dem Messkontakt (7) abgewandten Seite der Platine (8) angeordneten Abstandshalter (70) aufweist, wobei der Abstandshalter (70) vorzugsweise an einer die Bohrungswand berührenden und der Platine (8) abgewandten Außenfläche der Kontur der Bohrungswand angepasst ist und an der der Außenfläche gegenüberliegenden Fläche an der Platine (8) fixiert ist, wobei der Abstandshalter (70) vorzugsweise mit der Platine (8) verklebt und/oder verschraubt und/oder verklipst ist.

5. Wälzkörper (1) nach einem der vorhergehenden Ansprüche, wobei in der Bohrung (3) wenigstens zwei voneinander entlang der Mittelachse beabstandete Sensoren (5, 5') angeordnet sind.

6. Wälzkörper (1) nach einem der vorhergehenden Ansprüche und Anspruch 2, **dadurch gekennzeichnet, dass** das Funkmodul (6) zur Übertragung der gemessenen Daten in einem Frequenzbereich von 100 MHz bis 6 GHz, vorzugsweise von 300 MHz bis 2 GHz, besonders bevorzugt von 700 MHz bis 1 GHz, insbesondere mit einer Frequenz von 868 MHz, vorgesehen ist.

7. Wälzkörper (1) nach einem der vorhergehenden Ansprüche, wobei der Wälzkörper (1) einen Energiespeicher zum Zwischenspeichern von elektrischer Energie aufweist, wobei der Energiespeicher vorzugsweise ein Kondensator ist.

8. Wälzkörper (1) nach einem der Ansprüche 1 bis 7, **dadurch gekennzeichnet, dass** die Platine (8) einen Mikrocontroller aufweist, wobei der Mikrocontroller einen elektronischen Speicher zum Zwischenspeichern von Messdaten aufweist.

9. Wälzkörper (1) nach einem der vorhergehenden Ansprüche, **dadurch gekennzeichnet, dass** an der Bohrungswandung, insbesondere in radialer Richtung wenigstens teilweise umlaufend, ein Dehnungsmessstreifen (9) angeordnet ist.

10. Wälzkörper (1) nach einem der vorhergehenden Ansprüche, **dadurch gekennzeichnet, dass** der Wälzkörper (1) ein Mittel zur Temperaturbestimmung, umfasst.

11. Wälzkörper (1) nach einem der vorhergehenden Ansprüche, **dadurch gekennzeichnet, dass** der Wälzkörper (1) ein Mittel zur Beschleunigungsbestimmung umfasst.

12. Wälzlager (100), insbesondere Großwälzlager, mit einem ersten Lagerring (11) und einem um eine Drehachse drehbaren, und insbesondere konzentrisch zu dem ersten Lagerring (11) angeordneten zweiten Lagerring (12), sowie einer Vielzahl von zwischen dem ersten Lagerring (11) und dem zweiten Lagerring (12) angeordneten Wälzkörpern (1'), **dadurch gekennzeichnet, dass** wenigstens ein Wälzkörper (1') ein Wälzkörper (1) gemäß einem der vorhergehenden Ansprüche ist.

13. Verfahren zur Belastungsmessung eines Wälzkörpers (1) in einem Wälzlager (100) nach Anspruch 12, insbesondere einem Großwälzlager, wobei eine Verformung des Wälzkörpers (1) durch eine Abstandsmessung mit dem Sensor (5) gemessen wird, wobei die vom Sensor (5) gemessenen Daten vorzugsweise von einem Funkmodul (6) übertragen werden, wobei vorzugsweise Energie für den Sensor (5) und/oder für das das Funkmodul (6) von dem Mikrogenerator (4) bereitgestellt wird

14. Verfahren nach Anspruch 13, wobei das Wälzlager einen Wälzkörper gemäß einem der Ansprüche 8 bis 11 aufweist, wobei Messdaten in dem elektronischen Speicher des Mikrocontrollers auf der Platine (8) zwischengespeichert werden und in Abhängigkeit einer Kondensatorladung paketweise gemessen und zusammengefasst und als Pakete zeitversetzt von dem Übertragungsmodul übertragen werden.

## Claims

1. Rolling element (1) for use in a rolling bearing (100), having an outer shell (2) and a bore hole (3), wherein the bore hole (3) is preferably provided along a centre axis of the rolling element (1), wherein the rolling element (1) comprises at least one sensor (5), arranged in the bore hole (3), for load measurement and one transmission module for transmitting the data measured by the sensor (5), the rolling element has an energy source which is provided for supplying the energy required for operating the sensor (5) and/or the transmission module, and wherein the rolling element (1) has a circuit board (8) arranged in the bore hole (3) substantially parallel to the centre axis of the rolling element (1), **characterized in that** the sensor (5) is an inductively measuring sensor which has a conductor track (22) arranged on the circuit board (8) and a conductive measuring contact (7) arranged on the bore hole wall, wherein the measuring contact (7) is matched to the contour of the bore hole wall on a surface touching the bore hole wall and averted from the circuit board (8) and has a measuring surface substantially parallel to the circuit board (8) on a surface facing the circuit board (8), wherein a gap (19) is provided between the conductor track (22) and the measuring surface, and the sensor (5) is suitable for determining the size of the gap (19) by generating eddy currents in the measuring contact (7).

2. Rolling element (1) according to Claim 1, wherein the transmission module is a radio module (6).

3. Rolling element (1) according to either of the preceding claims, wherein the energy source is a microgenerator (4).

4. Rolling element (1) according to one of Claims 1 to 3, wherein the sensor (5) has a spacer (70) arranged on that side of the circuit board (8) which is averted from the measuring contact (7), wherein the spacer (70) is preferably matched to the contour of the bore hole wall on an outer surface touching the bore hole wall and averted from the circuit board (8) and is fixed to the circuit board (8) on the surface situated opposite the outer surface, wherein the spacer (70) is preferably adhesively bonded and/or screwed and/or clipped to the circuit board (8).

5. Rolling element (1) according to one of the preceding claims, wherein at least two sensors (5, 5') spaced apart from one another along the centre axis are arranged in the bore hole (3).

6. Rolling element (1) according to one of the preceding claims and Claim 2, **characterized in that** the radio module (6) is intended to transmit the measured data in a frequency range of from 100 MHz to 6 GHz, preferably of from 300 MHz to 2 GHz, particularly preferably of from 700 MHz to 1 GHz, in particular at a frequency of 868 MHz.

7. Rolling element (1) according to one of the preceding claims, wherein the rolling element (1) has an energy store for buffer-storing electrical energy, wherein the energy store is preferably a capacitor.

8. Rolling element (1) according to one of Claims 1 to 7, **characterized in that** the circuit board (8) has a microcontroller, wherein the microcontroller has an electronic memory for buffer-storing measurement data.

9. Rolling body (1) according to one of the preceding claims, **characterized in that** a strain gauge (9) is arranged on the bore hole wall, in particular in the radial direction in an at least partially encircling manner.

10. Rolling element (1) according to one of the preceding claims, **characterized in that** the rolling element (1) comprises a means for temperature determination.

11. Rolling element (1) according to one of the preceding claims, **characterized in that** the rolling element (1) comprises a means for acceleration determination.

12. Rolling bearing (100), in particular large rolling bearing, having a first bearing ring (11) and a second bearing ring (12) rotatable about a rotation axis and in particular arranged concentrically with respect to the first bearing ring (11), and having a large number of rolling bodies (1') arranged between the first bearing ring (11) and the second bearing ring (12), **characterized in that** at least one rolling element (1') is a rolling element (1) according to one of the preceding claims.

13. Method for load measurement of a rolling element (1) in a rolling bearing (100) according to Claim 12, in particular a large rolling bearing, wherein deformation of the rolling element (1) is measured by a distance measurement using the sensor (5), wherein the data measured by the sensor (5) is preferably transmitted by a radio module (6), wherein energy for the sensor (5) and/or for the radio module (6) is preferably supplied by the microgenerator (4).

14. Method according to Claim 13, wherein the rolling bearing has a rolling element according to one of Claims 8 to 11, wherein measurement data is buffer-stored in the electronic memory of the microcontroller on the circuit board (8) and measured and combined in packets as a function of a capacitor charge and transmitted in the form of packets by the transmission module with a time delay.

## Revendications

1. Corps de roulement (1) à utiliser dans un palier à roulement (100), comprenant une enveloppe extérieure (2) et un alésage (3), l'alésage (3) étant de préférence prévu le long d'un axe médian du corps de roulement (1), le corps de roulement (1) comprenant au moins un capteur (5) pour la mesure de sollicitation, disposé dans l'alésage (3), et un module de transmission pour la transmission des données mesurées par le capteur (5), le corps de roulement présentant une source d'énergie qui est prévue pour fournir l'énergie nécessaire au fonctionnement du capteur (5) et/ou du module de transmission, et dans lequel le corps de roulement (1) présente une carte de circuit (8) disposée dans l'alésage (3) de manière substantiellement parallèle à l'axe médian du corps de roulement (1),
**caractérisé en ce que** le capteur (5) est un capteur à mesure inductive qui présente une piste conductrice (22) disposée sur la carte de circuit (8) et un contact de mesure conducteur (7) disposé sur la paroi d'alésage, le contact de mesure (7) étant ajusté sur une surface du contour de la paroi d'alésage, en contact avec la paroi d'alésage et détournée de la carte de circuit (8), et présentant sur une surface tournée vers la carte de circuit (8) une surface de mesure substantiellement parallèle à la carte de circuit (8), dans lequel un intervalle (19) est prévu entre la piste conductrice (22) et la surface de mesure, et le capteur (5) est adapté pour établir la taille de l'intervalle (19) en générant des courants de Foucault dans le contact de mesure (7).

2. Corps de roulement (1) selon la revendication 1, dans lequel le module de transmission est un module radio (6) .

3. Corps de roulement (1) selon l'une quelconque des revendications précédentes, dans lequel la source d'énergie est un microgénérateur (4).

4. Corps de roulement (1) selon l'une quelconque des revendications 1 à 3, dans lequel le capteur (5) présente un écarteur (70) disposé sur une face de la carte de circuit (8) détournée du contact de mesure (7), l'écarteur (70) étant de préférence ajusté sur une surface extérieure du contour de la paroi d'alésage, en contact avec la paroi d'alésage et détournée de la carte de circuit (8), et étant fixé à la carte de circuit (8) sur la surface opposée à la surface extérieure, dans lequel l'écarteur (70) est de préférence collé et/ou vissé et/ou encliqueté sur la carte de circuit (8).

5. Corps de roulement (1) selon l'une quelconque des revendications précédentes, dans lequel au moins deux capteurs (5, 5') espacés l'un de l'autre le long de l'axe médian sont disposés dans l'alésage (3).

6. Corps de roulement (1) selon l'une quelconque des revendications précédentes et selon la revendication 2, **caractérisé en ce que** le module radio (6) est prévu pour la transmission des données mesurées dans une plage de fréquence de 100 MHz à 6 GHz, de préférence de 300 MHz à 2 GHz, de manière particulièrement préférée de 700 MHz à 1 GHz, en particulier à une fréquence de 868 MHz.

7. Corps de roulement (1) selon l'une quelconque des revendications précédentes, dans lequel le corps de roulement (1) présente un accumulateur d'énergie pour le stockage temporaire d'énergie électrique, l'accumulateur d'énergie étant de préférence un condensateur.

8. Corps de roulement (1) selon l'une quelconque des revendications 1 à 7, **caractérisé en ce que** la carte de circuit (8) présente un microcontrôleur, le microcontrôleur présentant une mémoire électronique pour le stockage temporaire de données de mesure.

9. Corps de roulement (1) selon l'une quelconque des revendications précédentes, **caractérisé en ce qu'**une jauge de contrainte (9) est disposée sur la paroi d'alésage, en particulier de manière au moins partiellement périphérique dans la direction radiale.

10. Corps de roulement (1) selon l'une quelconque des revendications précédentes, **caractérisé en ce que** le corps de roulement (1) comprend un moyen de détermination de température.

11. Corps de roulement (1) selon l'une quelconque des revendications précédentes, **caractérisé en ce que** le corps de roulement (1) comprend un moyen de détermination d'accélération.

12. Palier à roulement (100), en particulier couronne d'orientation, comprenant une première bague de roulement (11) et une deuxième bague de roulement (12) pouvant tourner autour d'un axe de rotation et disposée en particulier de manière concentrique par rapport à la première bague de roulement (11), ainsi qu'une pluralité de corps de roulement (1') disposés entre la première bague de roulement (11) et la deuxième bague de roulement (12), **caractérisé en ce qu'**au moins un corps de roulement (1') est un corps de roulement (1) selon l'une quelconque des revendications précédentes.

13. Procédé de mesure de sollicitation d'un corps de roulement (1) dans un palier à roulement (100) selon la revendication 12, en particulier une couronne d'orientation, dans lequel une déformation du corps de roulement (1) est mesurée par une mesure de distance avec un capteur (5), les données mesurées par le capteur (5) étant de préférence transmises par un module radio, dans lequel de préférence l'énergie pour le capteur (5) et/ou pour le module radio (6) est fournie par le microgénérateur (4).

14. Procédé selon la revendication 13, dans lequel le palier à roulement présente un corps de roulement selon l'une quelconque des revendications 8 à 11, dans lequel des données de mesure sont stockées temporairement dans la mémoire électronique du microcontrôleur sur la carte de circuit (8) et sont mesurées par paquets en fonction d'une charge de condensateur et sont regroupées et transmises en différé sous forme de paquets par le module de transmission.
